# EUROPEAN PATENT APPLICATION

(11) **EP 4 841 866 A1**
(43) Date of publication of application: **18.11.2026**
(21) Application number: 25744443.0
(22) Date of filing: 07.01.2025
(51) Int. Cl.: H02K 1/20, H02K 9/19, H02K 5/20, H02K 1/12

(54) **STATOR LAMINATION, STATOR IRON CORE, MOTOR, POWER ASSEMBLY AND ELECTRIC VEHICLE**

(30) Priority: 24.01.2024 CN 202410103816
(71) Applicant: Huawei Digital Power Technologies Co., Ltd., Shenzhen, Guangdong 518043 (CN)
(72) Inventor: HUANGFU, Yuzhao, Shenzhen, Guangdong 518043 (CN); WU, Hao, Shenzhen, Guangdong 518043 (CN); LI, Quanming, Shenzhen, Guangdong 518043 (CN)
(74) Representative: Huawei European IPR
(86) International application number: PCT/CN2025/071099
(87) International publication number: WO 2025/156999

(57) **Abstract**

This application relates to the field of motor technologies, and in particular, to a stator lamination having a plurality of communication holes, a stator core, a motor, a powertrain, and an electric vehicle. The stator lamination includes a center hole, a plurality of slots, a plurality of first communication holes, and a plurality of circulation holes. Each slot communicates with the center hole in a radial direction of the stator lamination. Each first communication hole, each circulation hole, and each slot separately run through the stator lamination in an axial direction of the stator lamination. In a circumferential direction of the stator lamination, the plurality of first communication holes are spaced apart, the plurality of circulation holes are spaced apart, and the plurality of slots are spaced apart. In the radial direction of the stator lamination, a spacing between each first communication hole and the center hole is greater than a spacing between each circulation hole and the center hole, each first communication hole communicates with an outer circumferential surface of the stator lamination, and a radial dimension of each first communication hole is greater than or equal to a spacing between the circulation hole and the outer circumferential surface of the stator lamination. A cooling medium on an outer circumferential surface of the stator core can be guided into the stator core, so that cooling efficiency of the stator core is improved.

## Description

### CROSS-REFERENCE TO RELATED APPLICATIONS

This application claims priority to Chinese Patent Application No. 202410103816.0, filed with the China National Intellectual Property Administration on January 24, 2024 and entitled "STATOR LAMINATION, STATOR CORE, MOTOR, POWERTRAIN, AND ELECTRIC VEHICLE", which is incorporated herein by reference in its entirety.

### TECHNICAL FIELD

This application relates to the field of motor technologies, and in particular, to a stator lamination having a plurality of communication holes, a stator core, a motor, a powertrain, and an electric vehicle.

### BACKGROUND

With the development of science and technology, power density of a motor is increasingly high, while a size of the motor is increasingly small. Higher power density of the motor imposes a higher requirement on heat dissipation of the motor.

When the motor operates, a heat loss of a stator core is a significant heat source of the motor, and oil-cooling heat dissipation may be performed on a stator through a heat dissipation channel provided in the stator of the motor. Currently, heat dissipation manners of the stator of the motor in the conventional technologies are inadequate, and cooling efficiency needs to be improved.

### SUMMARY

This application provides a stator lamination having a plurality of communication holes, a stator core, a motor, a powertrain, and an electric vehicle. At least two stator laminations are stacked to guide a cooling medium on an outer circumferential surface of the stator core into the stator core, so that cooling efficiency of the stator core is improved.

According to a first aspect, this application provides a stator lamination. The stator lamination may be used as a part of a stator core. The stator lamination includes a center hole, a plurality of slots, a plurality of first communication holes, and a plurality of circulation holes. Each slot communicates with the center hole in a radial direction of the stator lamination. Each first communication hole, each circulation hole, and each slot separately run through the stator lamination in an axial direction of the stator lamination. In a circumferential direction of the stator lamination, the plurality of first communication holes are spaced apart, the plurality of circulation holes are spaced apart, and the plurality of slots are spaced apart. In the radial direction of the stator lamination, a spacing between each first communication hole and the center hole is greater than a spacing between each circulation hole and the center hole, each first communication hole communicates with an outer circumferential surface of the stator lamination, and a radial dimension of each first communication hole is greater than or equal to a spacing between the circulation hole and the outer circumferential surface of the stator lamination.

For the stator lamination, if the first communication hole communicates with the outer circumferential surface of the stator lamination, a spacing between the outer circumferential surface of the stator lamination and an end that is of the first communication hole and that faces the center hole is the radial dimension of the first communication hole. The radial dimension of the first communication hole is greater than or equal to the spacing between the circulation hole and the outer circumferential surface of the stator lamination. In this case, the spacing between the first communication hole and the center hole is greater than or equal to the spacing between the center hole and an end that is of the circulation hole and that faces the center hole. Two stator laminations are stacked in the axial direction of the stator lamination, and the two stator laminations are staggered by a specific angle in the circumferential direction of the stator lamination. This allows one first communication hole of one stator lamination to communicate with a circulation hole of the other stator lamination, so that the circulation hole can communicate with the outer circumferential surface of the stator lamination. When liquid cooling heat dissipation is performed on a stator core having at least two stator laminations, a cooling medium on the outer circumferential surface of the stator lamination may enter the circulation hole along the first communication hole, to perform liquid cooling heat dissipation on an interior of the stator core, thereby improving cooling efficiency. In this way, heat dissipation performance of a motor is improved.

In some possible implementations, in the circumferential direction of the stator lamination, a circumferential dimension of the circulation hole is greater than a circumferential dimension of the first communication hole, and a distance between any two adjacent circulation holes is greater than the circumferential dimension of the first communication hole. The circulation hole can accommodate more cooling medium, and the cooling medium can uniformly distribute the cooling medium in the circumferential direction of the stator lamination.

In some possible implementations, one or more of the first communication holes are spaced apart between two adjacent circulation holes in the circumferential direction of the stator lamination. A quantity and distribution density of the first communication holes may affect a liquid amount of the cooling medium that enters the circulation hole. A position between the first communication hole and the circulation hole may be adjusted as required, to uniformly distribute the cooling medium.

In some possible implementations, the stator lamination includes a plurality of second communication holes, each second communication hole runs through the stator lamination in the axial direction of the stator lamination, and the plurality of second communication holes are spaced apart in the circumferential direction of the stator lamination. In the radial direction of the stator lamination, a spacing between each second communication hole and the outer circumferential surface of the stator lamination is less than or equal to a sum of the spacing between the circulation hole and the outer circumferential surface of the stator lamination and a radial dimension of the circulation hole. Two stator laminations are stacked in the axial direction of the stator lamination, and the two stator laminations are staggered by a specific angle in the circumferential direction of the stator lamination. This allows one second communication hole of one stator lamination to communicate with a circulation hole of the other stator lamination, so that the second communication hole can communicate with the outer circumferential surface of the stator lamination.

In some possible implementations, in the circumferential direction of the stator lamination, the circumferential dimension of the circulation hole is greater than a circumferential dimension of the second communication hole, and the distance between any two adjacent circulation holes is greater than the circumferential dimension of the second communication hole. The cooling medium accommodated in the circulation hole can be uniformly distributed in the circumferential direction of the stator lamination, and transported to the second communication hole.

In some possible implementations, a quantity of the plurality of second communication holes is less than a quantity of the plurality of slots. In the circumferential direction of the stator lamination, a spacing between two adjacent slots is less than a spacing between two adjacent second communication holes.

In some possible implementations, the plurality of slots respectively communicate with the plurality of second communication holes in the radial direction of the stator lamination, to implement oil flowing in the slots. The cooling medium in the circulation hole may enter the slot through the second communication hole, to cool a stator winding accommodated in the slot. Specifically, one of any two circumferentially adjacent slots of the stator lamination is configured to communicate with one second communication hole.

In some possible implementations, in the radial direction of the stator lamination, each second communication hole is spaced between one slot and the outer circumferential surface of the stator lamination, and a spacing between the second communication hole and the center hole is greater than a radial dimension of the slot. The second communication hole is equivalent to being arranged on a side of a slot bottom of the slot, to implement oil flowing at the slot bottom.

In some possible implementations, in the circumferential direction of the stator lamination, each second communication hole is spaced between any two circumferentially adjacent slots of the stator lamination, to implement oil flowing between the slots. The spacing between the second communication hole and the center hole may be less than a spacing between the slot bottom of the slot and the center hole.

In some possible implementations, in the circumferential direction of the stator lamination, the plurality of first communication holes are staggered relative to the plurality of second communication holes, and one of one first communication hole and one adjacent second communication hole communicates with the circulation hole.

In some possible implementations, in the circumferential direction of the stator lamination, the distance between any two adjacent circulation holes is less than the circumferential dimension of the circulation hole. Two stator laminations are stacked in the axial direction of the stator lamination, and the two stator laminations are staggered by a specific angle in the circumferential direction of the stator lamination. This allows one circulation hole of one stator lamination to simultaneously communicate with two circulation holes that are of the other stator lamination and that are adjacent to each other in the circumferential direction of the stator lamination, to form a channel for circumferential flow of the cooling medium, so that the cooling medium can flow in the circumferential direction of the stator lamination.

According to a second aspect, this application provides a stator core. The stator core includes at least two stator laminations provided in the first aspect. The at least two stator laminations are adjacently arranged in an axial direction of the stator core, and each circulation hole of one stator lamination is staggered relative to and communicates with one circulation hole of another stator lamination in a circumferential direction of the stator core. In this way, a channel that extends in the circumferential direction of the stator core and that is for circulation of the cooling medium is formed. Each first communication hole of one stator lamination communicates with one circulation hole of another stator lamination, to guide the cooling medium on an outer circumferential surface of the stator core to the circulation hole.

In some possible implementations, the stator core includes at least one first lamination, and in the axial direction of the stator core, at least one first lamination is arranged on a side that is of one of the stator laminations and that is away from another adjacent stator lamination. In the axial direction of the stator core, each first communication hole of the stator lamination communicates with at least one first communication hole of the adjacent first lamination.

According to a third aspect, this application provides a motor. The motor includes a housing and the stator core provided in the second aspect and any one of the implementations of the second aspect, and the housing is sleeved on an outer circumferential surface of the stator core. The housing includes a liquid inlet, and the coolant inlet is configured to communicate with first communication holes of at least one stator lamination.

In some possible implementations, an inner wall that is of the housing and that faces the stator core includes a radial groove. In a radial direction of the stator core, the liquid inlet communicates with the radial groove, and the radial groove communicates with at least one of the first communication holes. In an axial direction of the stator core, a radial dimension of the radial groove is greater than or equal to an axial size of one stator lamination.

According to a fourth aspect, this application provides a powertrain. The powertrain includes the motor according to the third aspect and any one of the implementations of the third aspect. The powertrain includes a reducer or a transmission, and the motor according to the third aspect and any one of the implementations of the third aspect. A motor shaft of the motor is in transmission connection to an input shaft of the reducer or an input shaft of the transmission. Because the motor has good heat dissipation performance, heat dissipation performance and power performance of the powertrain can be improved.

According to a fifth aspect, this application further provides an electric vehicle. The electric vehicle in this application includes wheels, a transmission mechanism, and the powertrain according to the fourth aspect and any one of the implementations of the fourth aspect. The powertrain drives the wheels through the transmission mechanism. The electric vehicle provided in this application has good heat dissipation performance and power performance.

### BRIEF DESCRIPTION OF DRAWINGS

FIG. 1 is a diagram of a structure of an electric vehicle according to an embodiment of this application;
FIG. 2 is a diagram of a structure of a powertrain according to an embodiment of this application;
FIG. 3a is a diagram of a structure in which a stator core of a motor is assembled with a housing according to an embodiment of this application;
FIG. 3b is a diagram of a structure in which a stator core of a motor is separated from a housing according to an embodiment of this application;
FIG. 4a is a diagram of a structure of a stator core according to an embodiment of this application;
FIG. 4b is an exploded view of a stator core according to an embodiment of this application;
FIG. 5a is a diagram of a structure of a stator lamination according to an embodiment of this application;
FIG. 5b is a diagram of a structure of a stator lamination according to an embodiment of this application;
FIG. 5c is an enlarged view of details at T1 in FIG. 5b;
FIG. 6a is a diagram of a structure in which two stator laminations are stacked according to an embodiment of this application;
FIG. 6b is an enlarged view of details at T2 in FIG. 6a;
FIG. 6c shows a model of a channel that is formed by the two stator laminations shown in FIG. 6a and that is for circulation of a cooling medium;
FIG. 7a is a diagram of a structure in which two stator laminations are stacked according to an embodiment of this application;
FIG. 7b is an enlarged view of details at T3 in FIG. 7a;
FIG. 7c shows a model of a channel that is formed by the two stator laminations shown in FIG. 7a and that is for circulation of a cooling medium;
FIG. 8a is a cross-sectional diagram of a partial structure of a stator according to an embodiment of this application;
FIG. 8b is an enlarged view of details at T4 in FIG. 8a;
FIG. 9a is a diagram of a structure of a stator lamination according to an embodiment of this application;
FIG. 9b is a diagram of a structure of a stator lamination according to an embodiment of this application;
FIG. 9c is a diagram of a structure of a stator lamination according to an embodiment of this application;
FIG. 9d is a diagram of a structure of a stator lamination according to an embodiment of this application;
FIG. 9e is a diagram of a structure of a stator lamination according to an embodiment of this application; and
FIG. 10 is a diagram of a structure of a fitting relationship between a stator lamination and a housing according to an embodiment of this application.

### DESCRIPTION OF EMBODIMENTS

To make the objectives, technical solutions, and advantages of this application clearer, the following further describes this application in detail with reference to the accompanying drawings.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly.

When a motor runs at a high speed, a heat loss of a stator core is a main heat source of the motor. In the conventional technology, oil-cooling heat dissipation is usually used for a stator of the motor. Specifically, oil may be passed through the back of the stator core and sprayed onto an end coil pack of a stator winding, to dissipate heat for the stator. This heat dissipation manner has inadequate heat dissipation effect, and cannot meet a high heat dissipation requirement due to an increase in power density of the motor. In addition, this heat dissipation manner imposes a limitation on a design of the motor, and reduces space utilization. Adding another auxiliary oil spray structure also increases production costs.

Based on this, embodiments of this application provide a stator lamination having a plurality of communication holes, a stator core, a motor, a powertrain, and an electric vehicle. At least two stator laminations are stacked to guide a cooling medium on an outer circumferential surface of the stator core into the stator core, so that cooling efficiency of the stator core is improved.

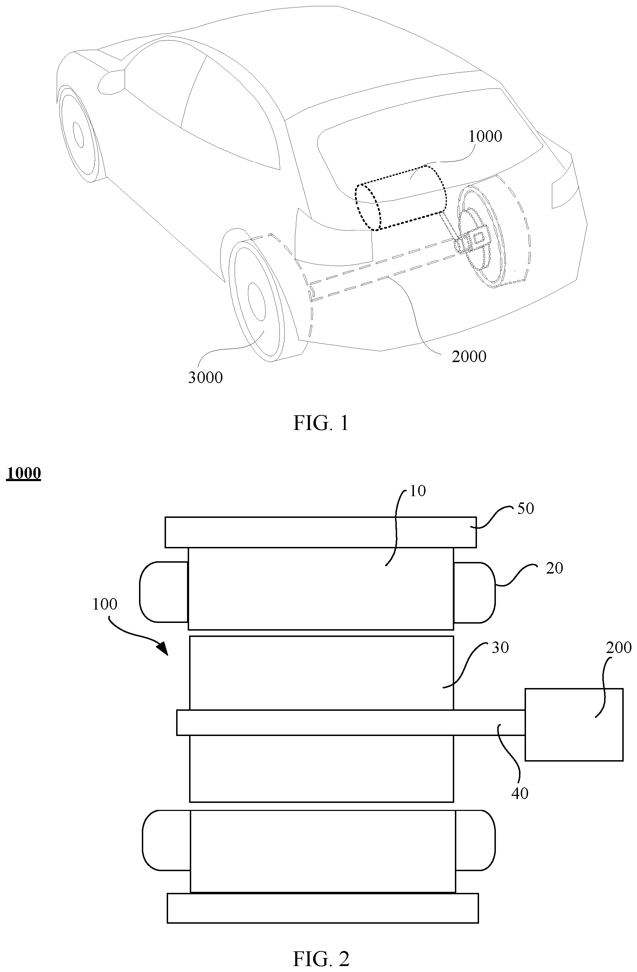

FIG. 1 is a diagram of an electric vehicle according to an embodiment of this application. Refer to FIG. 1. The electric vehicle provided in this embodiment of this application includes a powertrain 1000, a transmission mechanism 2000, and wheels 3000. The powertrain 1000 drives the wheel 3000 through the transmission mechanism 2000. The powertrain 1000 is configured to convert electric energy into mechanical energy. The transmission mechanism 2000 is configured to be in transmission connection to the powertrain 1000 and the wheel 3000.

FIG. 2 is a diagram of the powertrain according to an embodiment of this application. As shown in FIG. 2, the powertrain 1000 provided in this embodiment of this application includes a motor 100 and a reducer 200. The motor 100 is in transmission connection to the reducer 200. The motor 100 is configured to drive the transmission mechanism 2000 of the electric vehicle through the reducer 200. The motor 100 includes a stator core 10, a stator winding 20, a rotor 30, a motor shaft 40, and a housing 50. The rotor 30 is coaxially fastened to the motor shaft 40, and the motor shaft 40 is in transmission connection to the reducer 200. The stator core 10 is sleeved outside the rotor 30, the stator winding 20 is wound around the stator core 10, and the housing 50 is disposed outside the stator core 10. The reducer 200 may alternatively be a transmission gearbox. It should be understood that an axial direction of the stator core 10 is an axial direction of the motor 100, a radial direction of the stator core 10 is a radial direction of the motor 100, and a circumferential direction of the stator core 10 is a circumferential direction of the motor 100.

The motor 100 provided in this embodiment of this application is a motor in which a stator discharges liquid for winding cooling, and specifically means that a cooling medium used to dissipate heat for the stator 10 may be simultaneously sprayed onto an end winding of the stator winding 20 to dissipate heat.

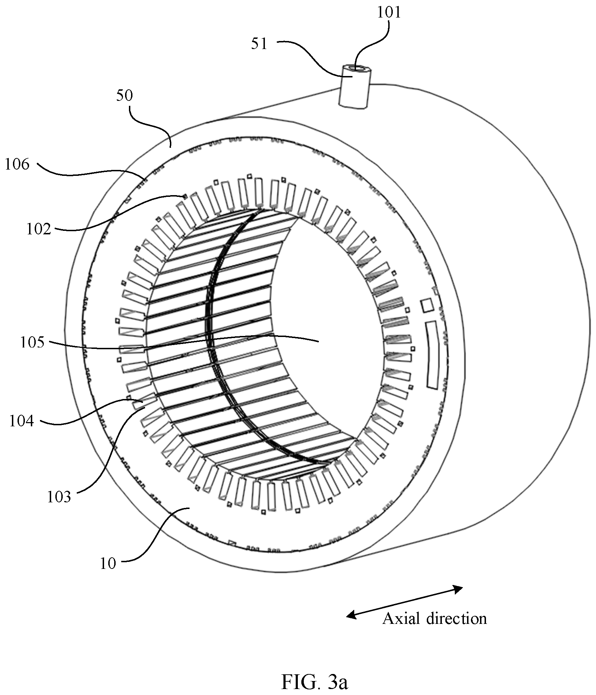

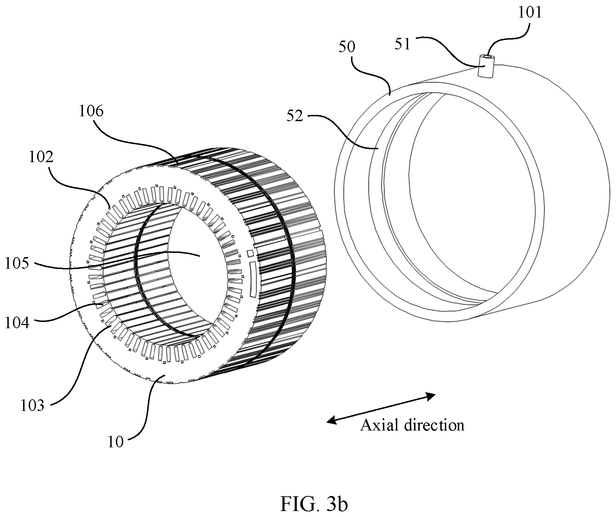

FIG. 3a shows a structure of the stator core 10 and the housing 50 according to an embodiment of this application. The housing 50 is sleeved on an outer circumferential surface of the stator core 10. FIG. 3b shows a structure in which the stator core 10 is separated from the housing 50.

Refer to FIG. 3a and FIG. 3b together. The housing 50 includes a liquid inlet pipe 51, and the liquid inlet pipe 51 is a hollow pipe. One end of the liquid inlet pipe 51 is fastened to an outer circumferential surface of the housing 50, and an opening at one end that is of the liquid inlet pipe 51 and that is away from the outer circumferential surface of the housing 50 forms a liquid inlet 101. The housing 50 is configured to circumferentially surround and seal an exterior of the stator core 10. The housing 50 is cylindrical. An inner wall of the housing 50 includes a radial groove 52. The radial groove 52 is formed by a groove provided in the inner wall of the housing 50, the radial groove 52 extends in a circumferential direction of the housing 50, and a groove bottom of the radial groove 52 communicates with the liquid inlet 101 through the liquid inlet pipe 51.

Refer to FIG. 3a and FIG. 3b together. The stator core 10 includes stator teeth 103, winding slots 104, and an accommodation hole 105. The accommodation hole 105 is located at an axis center of the stator core 10 and runs through the stator core 10 in the axial direction of the stator core 10. There are a plurality of winding slots 104, and the winding slots 104 are spaced apart in the circumferential direction of the stator core 10. Each winding slot 104 communicates with the accommodation hole 105 in the radial direction of the stator core 10. In the circumferential direction of the stator core 10, a stator tooth 103 is formed between any two adjacent winding slots 104. The winding slot 104 is configured to accommodate a part of the stator winding 20, and the accommodation hole 105 is configured to accommodate the rotor 30. The outer circumferential surface of the stator core 10 includes a plurality of circumferential flow channels 106, and the circumferential flow channels 106 communicate with an axial end surface of the stator core 10. The axial end surface of the stator core 10 includes a plurality of liquid outlets 102, and the plurality of liquid outlets 102 are spaced apart in the circumferential direction of the motor 100.

When the housing 50 is sleeved on the outer circumferential surface of the stator core 10, and when the housing 50 is sleeved in a sealed manner on the outer circumferential surface of the stator core 10 including a plurality of laminations 1, the radial groove 52 can communicate with the plurality of circumferential flow channels 106 on the outer circumferential surface of the stator core 10. Herein, for example, the radial groove 52 encircles the inner wall of the housing 50 to form a ring-shaped flow channel, and all of the circumferential flow channels 106 of the stator core 10 may communicate with the radial groove 52. In the axial direction of the stator core 10, an axial length of the radial groove 52 is less than an axial length of the circumferential flow channel 106. There is a flow channel in the stator core 10 for circulation of the cooling medium. The flow channel communicates at least one circumferential flow channel 106 with at least one liquid outlet 102, and the liquid outlet 102 is configured to spray out the cooling medium to dissipate heat for an end portion of the stator winding 20.

During liquid cooling of the stator, the cooling medium may be injected through the liquid inlet 101, and the cooling medium flows circumferentially around the stator core 10 along the radial groove 52 of the housing 50 and enters each circumferential flow channel 106 to flow in the axial direction of the stator core 10 to two end surfaces of the stator core 10. The cooling medium in the circumferential flow channel 106 may further flow to the plurality of liquid outlets 102 through the flow channel in the stator core 10 and be sprayed out from the plurality of liquid outlets 102. When circulating in the stator core 10, the cooling medium can dissipate heat for the stator winding 20 through the stator core 10. The cooling medium is sprayed out from the liquid outlet 102 and can be sprayed onto the end portion of the stator winding 20 located at an end portion of the stator core 10. For example, a quantity and an arrangement of the liquid outlets 102 may be adjusted based on an actual cooling requirement and a process condition.

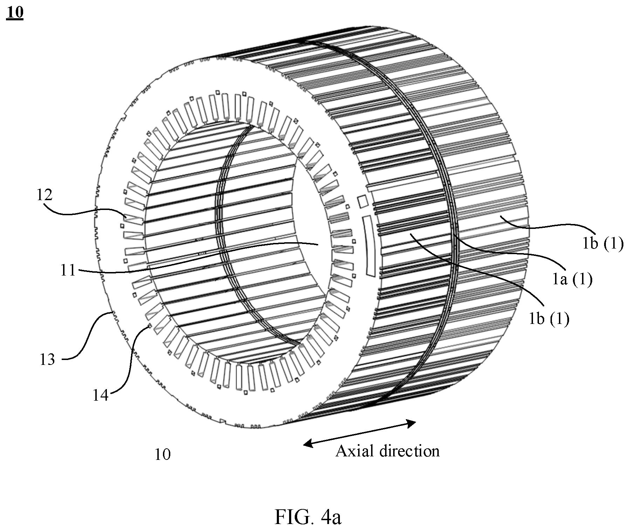

FIG. 4a shows a structure of the stator core 10. The stator core 10 includes a plurality of laminations 1, and each lamination 1 includes a center hole 11, a plurality of slots 12, a plurality of first communication holes 13, and a plurality of second communication holes 14. Each slot 12 communicates with the center hole 11 in a radial direction of the lamination 1. Each slot 12, each first communication hole 13, and each second communication hole 14 separately run through the lamination 1 in an axial direction of the lamination 1. In a circumferential direction of the lamination 1, the plurality of first communication holes 13 are spaced apart, the plurality of second communication holes 14 are spaced apart, and the plurality of slots 12 are spaced apart. As a result of sequentially adjacently arranging the plurality of laminations 1 in the axial direction of the stator core 10, the center holes 11 of the plurality of laminations 1 can communicate with each other to form the accommodation hole 105 of the stator core 10. The slots 12 of the plurality of laminations 1 can communicate with each other to form the winding slots 104 of the stator core 10, and a structure between any two circumferentially adjacent slots 12 of each of the plurality of laminations 1 can be stacked to form the stator teeth 103 of the stator core 10. The first communication hole 13 of each lamination 1 communicates with an outer circumferential surface of the lamination 1, and the first communication hole 13 may be used as a part of the circumferential flow channel 106 of the stator core 10. Each lamination 1 further includes the second communication holes 14. In the radial direction of the lamination 1, the second communication holes 14 are arranged between the first communication holes 13 and the center hole 11. The liquid outlet 102 of the stator core 10 is formed at an end that is of the second communication hole 14 of the lamination 1 arranged at an axial end portion of the stator core 10 and that faces the axial end surface of the stator core 10.

Still refer to FIG. 4a. The plurality of laminations 1 of the stator core 10 include at least two stator laminations 1a and at least one first lamination 1b. The stator lamination 1a is a radially connected lamination 1, and the at least two stator laminations 1a are adjacently arranged in the axial direction of the stator core 10 and are staggered relative to each other in the circumferential direction of the stator core 10. In the axial direction of the stator core 10, the at least one first lamination 1b is arranged on a side that is of one of the stator laminations 1a and that is away from another adjacent stator lamination 1a. For example, all the stator laminations 1a in FIG. 4a are adjacently arranged in the axial direction of the stator core 10, at least one first lamination 1b is arranged on one side of all the stator laminations 1a, and at least one first lamination 1b is arranged on the other side of all the stator laminations 1a. It may be considered that all the stator laminations 1a are arranged between the two first laminations 1b in the circumferential direction of the stator core 10. Certainly, the stator lamination 1a and the first lamination 1b may alternatively be arranged in another manner. The axial end portion of the stator core 10 is the first lamination 1b. It may be considered that a surface that is of the first lamination 1b and that is away from the stator lamination 1a is at least a part of the axial end surface of the stator core 10. An opening that is of a second communication hole 14 of the first lamination 1b and that is away from the stator lamination 1a forms the liquid outlet 102 of the stator core 10.

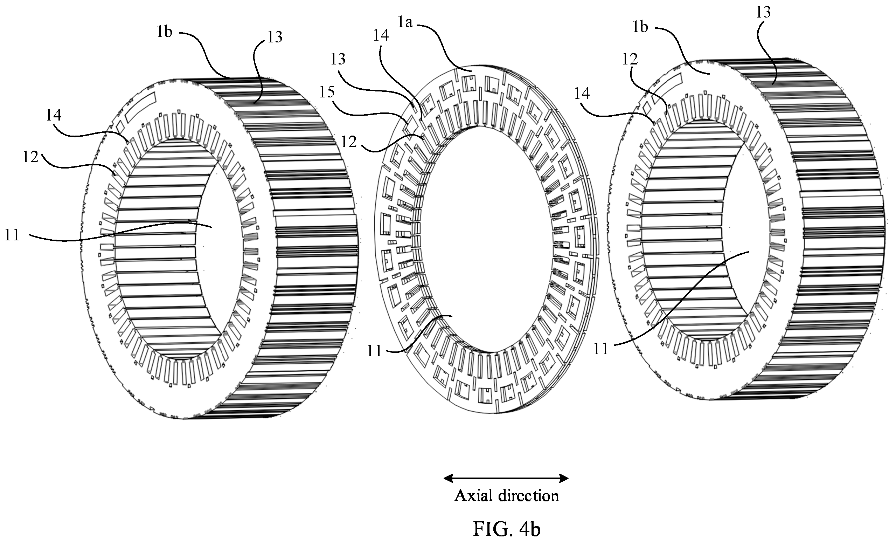

Based on FIG. 4a, refer to an exploded view of the stator core 10 shown in FIG. 4b. As shown in FIG. 4b, for example, there are three stator laminations 1a, and the three stator laminations 1a are adjacently arranged in the axial direction of the stator core 10. Each stator lamination 1a further includes a plurality of circulation holes 15, and the plurality of circulation holes 15 are spaced apart in a circumferential direction of the stator lamination 1a. Each circulation hole 15 runs through the stator lamination 1a in an axial direction of the stator lamination 1a, and each circulation hole 15 is arranged between an outer circumferential surface of the stator lamination 1a and the center hole 11 in a radial direction of the stator lamination 1a.

Still refer to FIG. 4b. For example, there are two first laminations 1b, and the two first laminations 1b are respectively arranged on two sides of the three stator laminations 1a in the axial direction of the stator core 10. A first communication hole 13 of each first lamination 1b communicates with an outer circumferential surface of the first lamination 1b. The first communication hole 13 is, for example, a slot formed on the outer circumferential surface of the first lamination 1b, and the first communication hole 13 extends in an axial direction of the first lamination 1b and communicates with an axial end surface of the first lamination 1b. It should be understood that, in FIG. 4b, the first lamination 1b has a large dimension in the axial direction of the stator core 10. It may alternatively be considered that the first lamination 1b is formed by stacking a plurality of laminations with a small thickness in the axial direction of the stator core 10.

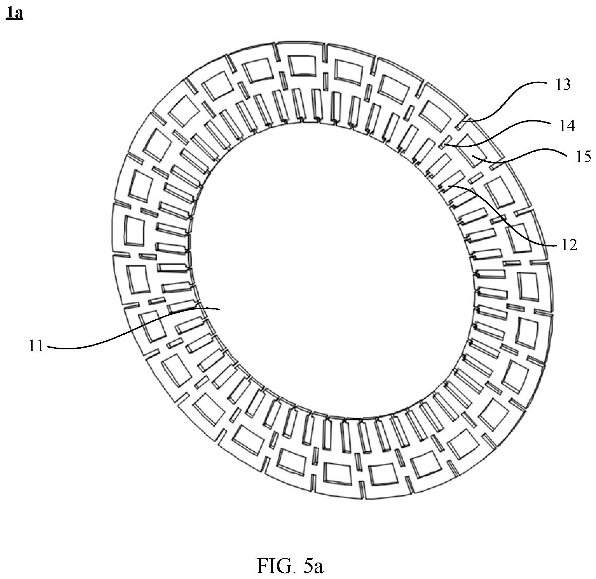

FIG. 5a shows a structure of a stator lamination 1a. As shown in FIG. 5a, the stator lamination 1a includes a center hole 11, a plurality of slots 12, a plurality of first communication holes 13, a plurality of second communication holes 14, and a plurality of circulation holes 15. The center hole 11, each slot 12, each first communication hole 13, each second communication hole 14, and each circulation hole 15 run through the stator lamination 1a in the axial direction of the stator lamination 1a.

For example, the center hole 11 is located at a center of the stator lamination 1a, the plurality of slots 12 are spaced apart in a circumferential direction of the stator lamination 1a, and each slot 12 communicates with the center hole 11 in a radial direction of the stator lamination 1a. The plurality of first communication holes 13 are spaced apart in the circumferential direction of the stator lamination 1a, and each first communication hole 13 communicates with an outer circumferential surface of the stator lamination 1a in the radial direction of the stator lamination 1a. The plurality of second communication holes 14 are spaced apart in the circumferential direction of the stator lamination 1a. In the circumferential direction of the stator lamination 1a, one circulation hole 15 is arranged between any two first communication holes 13, and the plurality of circulation holes 15 are spaced apart in the circumferential direction of the stator lamination 1a. In the radial direction of the stator lamination 1a, the first communication hole 13 is spaced from the second communication hole 14.

A quantity of the plurality of second communication holes 14 may be less than a quantity of the plurality of slots 12. Specifically, in the circumferential direction of the stator lamination 1a, a spacing between two adjacent slots 12 may be less than a quantity of two adjacent second communication holes 14. For example, the quantity of the slots 12 is twice a quantity of the first communication holes 13, twice the quantity of the second communication holes 14, and twice a quantity of the circulation holes 15. For example, both the first communication hole 13 and the second communication hole 14 are spaced between two adjacent circulation holes 15 in the circumferential direction of the stator lamination 1a.

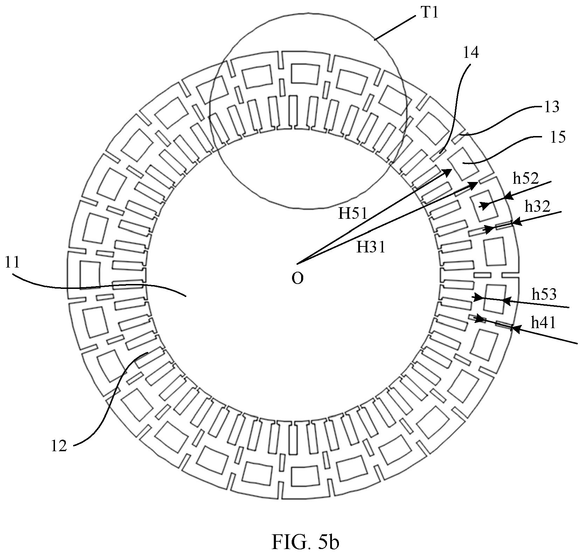

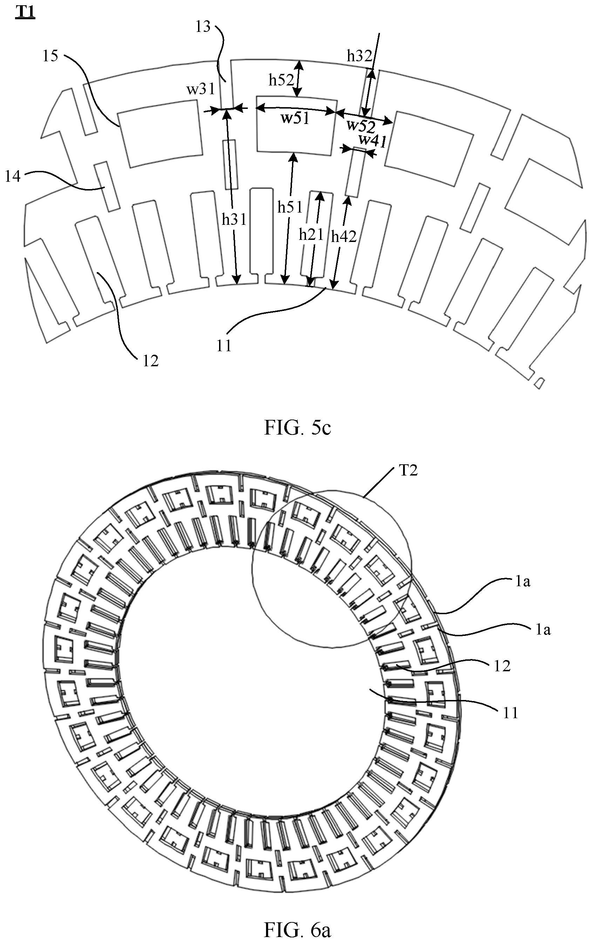

FIG. 5b shows a view of the stator lamination 1a observed in the axial direction. FIG. 5c shows an enlarged view of details at T1 in FIG. 5b. Refer to FIG. 5b and FIG. 5c together. In the radial direction of the stator lamination 1a, a spacing h31 between each first communication hole 13 and the center hole 11 is greater than a spacing h51 between each circulation hole 15 and the center hole 11. A radial dimension h32 of each first communication hole 13 is greater than or equal to a spacing h52 between the circulation hole 15 and the outer circumferential surface of the stator lamination 1a. In this case, the spacing between the first communication hole 13 and the center hole 11 is greater than or equal to the spacing h51 between the center hole 11 and an end that is of the circulation hole 15 and that faces the center hole 11. The stator lamination 1a is in the shape of a circular ring, the center hole 11 is located at the center of the stator lamination 1a, and a center of the center hole 11 coincides with the center O of the stator lamination 1a. The center O of the stator lamination 1a is used as a reference, and a spacing H31 between each first communication hole 13 and the center O is greater than a spacing H51 between each circulation hole 15 and the center O. Each second communication hole 14 is spaced apart between two circumferentially adjacent slots 12, and a spacing h42 between the second communication hole 14 and the center hole 11 is less than or equal to a spacing h21 between a slot bottom of the slot 12 and the center hole 11. When a cooling medium flows in the second communication hole 14, the cooling medium may cool a tooth part between the slots 12. The tooth part is a structure between two circumferentially adjacent slots 12.

It should be understood that, when the first communication hole 13, the second communication hole 14, and the circulation hole 15 are in irregular shapes, a spacing between the structures may be a spacing at a closest point.

Still refer to FIG. 5c. In the circumferential direction of the stator lamination 1a, for example, each first communication hole 13 is arranged between two adjacent circulation holes 15. A circumference with a same distance to the center hole 11 in the radial direction of the stator lamination 1a is used as an example. A circumferential dimension w51 of the circulation hole 15 is greater than a circumferential dimension w31 of the first communication hole 13. A spacing w52 between any two adjacent circulation holes 15 is greater than the circumferential dimension w31 of the first communication hole 13. The circumferential dimension w51 of the circulation hole 15 is greater than the spacing w52 between any two adjacent circulation holes 15.

Two or more stator laminations 1a are stacked in the axial direction of the stator laminations 1a, and any two adjacent stator laminations 1a are staggered by a specific angle in the circumferential direction of the stator laminations 1a. This allows one first communication hole 13 of one stator lamination 1a to communicate with one circulation hole 15 of the other stator lamination 1a, so that the circulation hole 15 can communicate with the outer circumferential surface of the stator lamination 1a, and the cooling medium can enter the stator core 10. One circulation hole 15 can accommodate more cooling medium, and after entering the circulation hole 15 through the first communication hole 13, the cooling medium can flow in the circumferential direction of the stator lamination 1a, to uniformly distribute the cooling medium.

Still refer to FIG. 5b and FIG. 5c. In the radial direction of the stator lamination 1a, a spacing h41 between each second communication hole 14 and the outer circumferential surface of the stator lamination 1a is less than or equal to a sum of the spacing h52 between the circulation hole 15 and the outer circumferential surface of the stator lamination 1a and a radial dimension h53 of the circulation hole 15. In the circumferential direction of the stator lamination 1a, the circumferential dimension w51 of the circulation hole 15 is greater than a circumferential dimension w41 of the second communication hole 14, and the spacing w52 between any two adjacent circulation holes 15 is greater than the circumferential dimension w41 of the second communication hole 14.

Two or more stator laminations 1a are stacked in the axial direction of the stator laminations 1a, and any two adjacent stator laminations 1a are staggered by a specific angle in the circumferential direction of the stator laminations 1a. This allows one second communication hole 14 of one stator lamination 1a to communicate with one circulation hole 15 of the other stator lamination 1a, so that the second communication hole 14 can communicate with one first communication hole 13 through the circulation hole 15. The first communication hole 13 communicates with the outer circumferential surface of the stator lamination 1a, and may be configured to form an outer-layer cooling channel of the stator core 10. The second communication hole 14 is closer to the center hole 11 than the first communication hole 13, and may form a part of an inner-layer cooling channel of the stator core 10, to perform liquid cooling heat dissipation on an inner-layer structure of the stator core 10. When liquid cooling heat dissipation is performed on the stator core 10 having at least two stator laminations 1a, the cooling medium on the outer circumferential surface of the stator lamination 1a may enter the second communication hole 14 along the first communication hole 13 and the circulation hole 15, so that double-layer cooling of the outer-layer cooling channel and the inner-layer cooling channel of the stator core 10 is implemented.

It should be understood that, in some embodiments, the stator lamination 1a may not have the second communication hole 14, and structures of the first communication hole 13 and the circulation hole 15 can also implement effect of guiding the cooling medium into the stator core 10.

FIG. 6a shows a structure in which two stator laminations 1a are adjacently arranged in the axial direction of the stator core 10. As shown in FIG. 6a, in the axial direction of the stator lamination 1a, the center holes 11 of the two stator laminations 1a are connected, and the plurality of slots 12 of the two stator laminations 1a are also respectively connected. The two stator laminations 1a are observed in the axial direction of the stator lamination 1a. The center holes 11 of the two stator laminations 1a coincide, and the plurality of slots 12 of the two stator laminations 1a respectively coincide. In the circumferential direction of the stator lamination 1a, the two stator laminations 1a are arranged in a manner of being staggered relative to each other by a specific angle. The plurality of slots 12 of the stator lamination 1a are uniformly arranged in the circumferential direction of the stator lamination 1a, and included angles between any two adjacent slots 12 are equal. The angle at which the two stator laminations 1a are staggered relative to each other is an integer multiple of the included angle between any two adjacent slots 12.

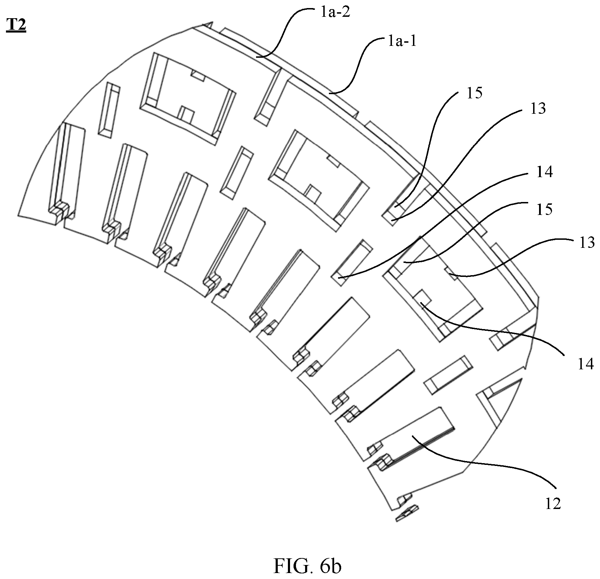

Further, refer to an enlarged view shown in FIG. 6b of details at T2 in FIG. 6a. As shown in FIG. 6b, the two stator laminations 1a are respectively, for example, a stator lamination 1a-1 and a stator lamination 1a-2, and the stator lamination 1a-1 is staggered relative to the stator lamination 1a-2 in the circumferential direction of the stator lamination 1a. Each circulation hole 15 of the stator lamination 1a-1 simultaneously communicates with two circumferentially adjacent circulation holes 15 of the stator lamination 1a-2, and each circulation hole 15 of the stator lamination 1a-2 simultaneously communicates with two circumferentially adjacent circulation holes 15 of the stator lamination 1a-1. The plurality of circulation holes 15 of the stator lamination 1a-1 can sequentially communicate with the plurality of circulation holes 15 of the stator lamination 1a-2 in the circumferential direction of the stator lamination 1a to form a circumferential flow channel. Each first communication hole 13 of the stator lamination 1a-1 can communicate with one circulation hole 15 of the stator lamination 1a-2, and each first communication hole 13 of the stator lamination 1a-2 can communicate with one circulation hole 15 of the stator lamination 1a-1. In this case, each first communication hole 13 can communicate with the circumferential flow channel. Each second communication hole 14 of the stator lamination 1a-1 can communicate with one circulation hole 15 of the stator lamination 1a-2, and each second communication hole 14 of the stator lamination 1a-2 can communicate with one circulation hole 15 of the stator lamination 1a-1. In this case, each second communication hole 14 can communicate with the circumferential flow channel.

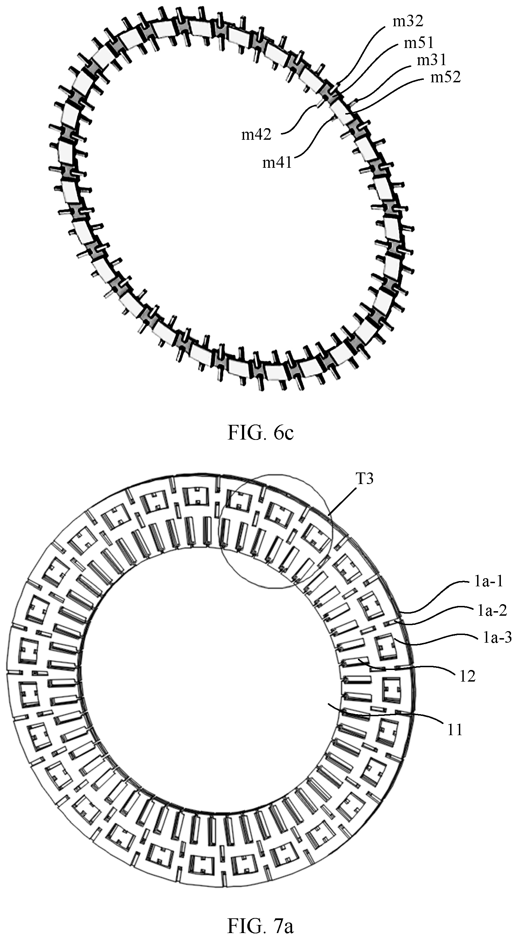

FIG. 6c shows a model of a channel that is formed by the two stator laminations 1a shown in FIG. 6a and that is for circulation of the cooling medium. As shown in FIG. 6c, each first communication hole 13 of the stator lamination 1a-1 forms a channel m31, each second communication hole 14 of the stator lamination 1a-1 forms a channel m41, and each circulation hole 15 of the stator lamination 1a-1 forms a channel m51. Each first communication hole 13 of the stator lamination 1a-2 forms a channel m32, each second communication hole 14 of the stator lamination 1a-2 forms a channel m42, and each circulation hole 15 of the stator lamination 1a-2 forms a channel m52. In the circumferential direction of the stator lamination 1a, the plurality of channels m51 of the stator lamination 1a-1 sequentially and alternately communicate with the plurality of channels m52 of the stator lamination 1a-2. That is, each channel m51 is connected between two adjacent channels m52, and each channel m52 is connected between two adjacent channels m51, to form a ring-shaped channel. Each channel m31 of the stator lamination 1a-1 communicates with one channel m52 of the stator lamination 1a-2, and each channel m41 of the stator lamination 1a-1 communicates with one channel m52 of the stator lamination 1a-2. Each channel m32 of the stator lamination 1a-2 communicates with one channel m51 of the stator lamination 1a-1, and each channel m42 of the stator lamination 1a-2 communicates with one channel m51 of the stator lamination 1a-1.

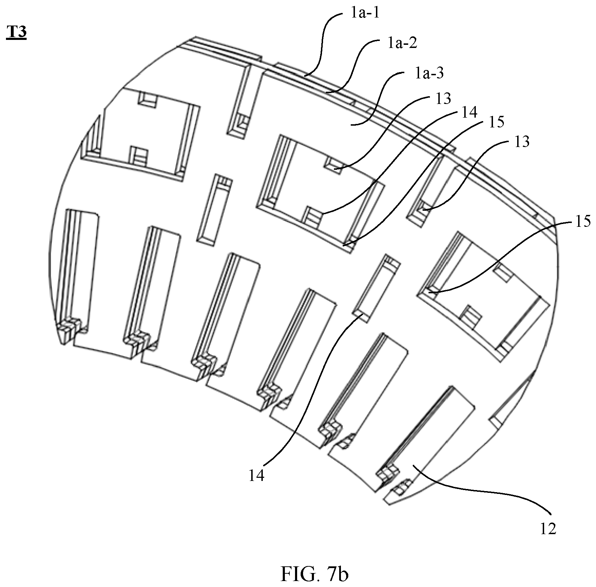

FIG. 7a shows a structure in which three stator laminations 1a are adjacently arranged in the axial direction of the stator core 10. FIG. 7b is an enlarged view of details at T3 in FIG. 7a. The three stator laminations 1a are respectively, for example, a stator lamination 1a-1, a stator lamination 1a-2, and a stator lamination 1a-3. For example, the stator lamination 1a-1 and the stator lamination 1a-3 are opposite to each other in the axial direction of the stator lamination 1a. Specifically, in the axial direction of the stator lamination 1a, one first communication hole 13 of the stator lamination 1a-1 corresponds to one first communication hole 13 of the stator lamination 1a-3, one second communication hole 14 of the stator lamination 1a-1 corresponds to one second communication hole 14 of the stator lamination 1a-3, and one circulation hole 15 of the stator lamination 1a-1 corresponds to one circulation hole 15 of the stator lamination 1a-3. Between any two adjacent stator laminations 1a, each circulation hole 15 of one stator lamination 1a simultaneously communicates with two circumferentially adjacent circulation holes 15 of the other stator lamination 1a, and each circulation hole 15 of the other stator lamination 1a simultaneously communicates with two circumferentially adjacent circulation holes 15 of the stator lamination 1a. The plurality of circulation holes 15 of one stator lamination 1a can sequentially communicate with the plurality of circulation holes 15 of the other stator lamination in the circumferential direction of the stator lamination 1a to form a circumferential flow channel. Each first communication hole 13 of one stator lamination 1a can communicate with one circulation hole 15 of the other stator lamination 1a, and each first communication hole 13 of the other stator lamination 1a can communicate with one circulation hole 15 of the stator lamination 1a. In this case, each first communication hole 13 can communicate with the circumferential flow channel. Each second communication hole 14 of one stator lamination 1a can communicate with one circulation hole 15 of the other stator lamination 1a, and each second communication hole 14 of the other stator lamination 1a can communicate with one circulation hole 15 of the stator lamination 1a. In this case, each second communication hole 14 can communicate with the circumferential flow channel.

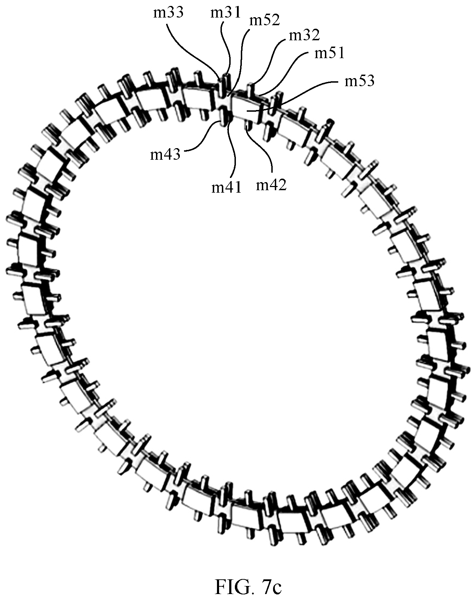

FIG. 7c shows a model of a channel that is formed by the three stator laminations 1a shown in FIG. 7a and that is for circulation of the cooling medium. As shown in FIG. 7c, each first communication hole 13 of the stator lamination 1a-1 forms a channel m31, each second communication hole 14 of the stator lamination 1a-1 forms a channel m41, and each circulation hole 15 of the stator lamination 1a-1 forms a channel m51. Each first communication hole 13 of the stator lamination 1a-2 forms a channel m32, each second communication hole 14 of the stator lamination 1a-2 forms a channel m42, and each circulation hole 15 of the stator lamination 1a-2 forms a channel m52. Each first communication hole 13 of the stator lamination 1a-3 forms a channel m33, each second communication hole 14 of the stator lamination 1a-3 forms a channel m43, and each circulation hole 15 of the stator lamination 1a-3 forms a channel m53. In the circumferential direction of the stator lamination 1a, the plurality of channels m51 of the stator lamination 1a-1 sequentially and alternately communicate with the plurality of channels m52 of the stator lamination 1a-2, the plurality of channels m53 of the stator lamination 1a-3 sequentially and alternately communicate with the plurality of channels m52 of the stator lamination 1a-2, and each channel m52 is connected between two adjacent channels m51 and between two adjacent channels m53, to form a ring-shaped flow channel. Each channel m31 of the stator lamination 1a-1 communicates with one channel m52 of the stator lamination 1a-2, and each channel m41 of the stator lamination 1a-1 communicates with one channel m52 of the stator lamination 1a-2. Each channel m33 of the stator lamination 1a-3 communicates with one channel m52 of the stator lamination 1a-2, and each channel m43 of the stator lamination 1a-3 communicates with one channel m52 of the stator lamination 1a-2. Each channel m32 of the stator lamination 1a-2 communicates with one channel m51 of the stator lamination 1a-1 and one channel m53 of the stator lamination 1a-3, and each channel m42 of the stator lamination 1a-2 communicates with one channel m51 of the stator lamination 1a-1 and one channel m53 of the stator lamination 1a-3.

It should be understood that, in a partial structure of the stator core 10 shown in FIG. 6a to FIG. 6c and FIG. 7a to FIG. 7c, the circulation holes 15 of two adjacent stator laminations 1a can be sequentially connected in a circumferentially staggered manner to form a ring-shaped channel. In some embodiments, the circulation holes 15 of two adjacent stator laminations 1a can be partially staggered relative to and communicate with each other in the circumferential direction to form an arc-shaped channel. The channel extends in the circumferential direction of the stator lamination 1a, but is not sequentially connected to form a ring. The arc-shaped channel may also be used for the cooling medium to flow in the circumferential direction of the stator lamination 1a, to improve circumferential distribution uniformity of the cooling medium.

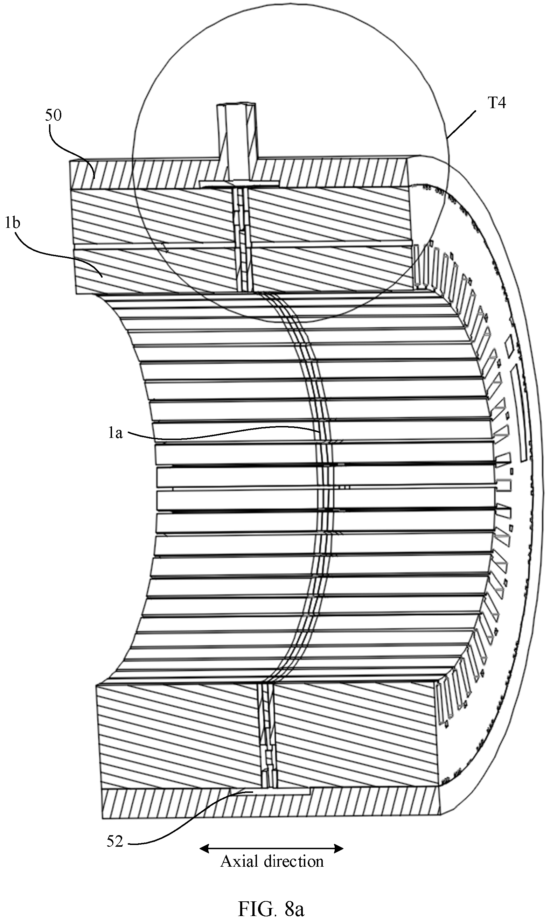

FIG. 8a is a diagram of a partial cross-sectional structure of fitting between the stator core 10 and the housing 50 according to an embodiment of this application. As shown in FIG. 8a, in the radial direction of the stator core 10, the radial groove 52 of the housing 50 corresponds in position to three stator laminations 1a of the stator core 10. In the axial direction of the stator core 10, the axial length of the radial groove 52 is greater than or equal to an axial size of one stator lamination 1a. For example, the axial length of the radial groove 52 herein is greater than an axial size of the three stator laminations 1a.

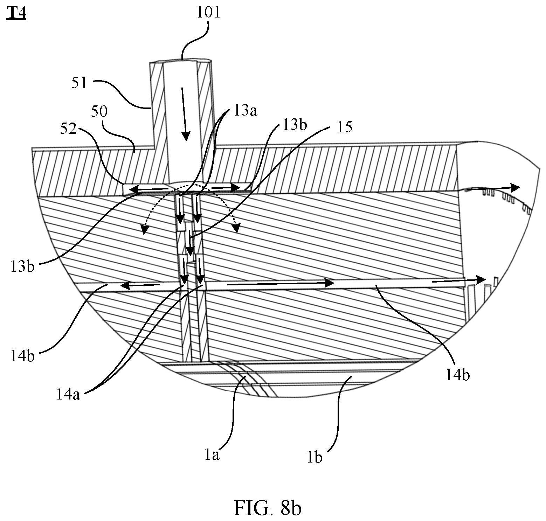

FIG. 8b is an enlarged view of details at T4 in FIG. 8a. As shown in FIG. 8b, the three stator laminations 1a are adjacently arranged in the axial direction of the stator core 10, and one first lamination 1b is arranged on each of two sides of the three stator laminations 1a. The section passes through one circulation hole 15 of the middle stator lamination 1a. The radial groove 52 of the housing 50 communicates with the circumferential flow channel 106 of the stator core 10. First communication holes 13b of the first lamination 1b and first communication holes 13a of the stator lamination 1a are separately a part of the circumferential flow channel 106. For example, the radial groove 52 encircles the outer circumferential surface of the stator core 10. A projection of the radial groove 52 on the outer circumferential surface of the stator core 10 in the radial direction of the stator core 10, for example, covers the three stator laminations 1a and a part of the two first laminations 1b. In this case, the radial groove 52 communicates with each first communication hole 13a of each stator lamination 1a, and also communicates with each first communication hole 13b of each first lamination 1b.

In the stator core 10, at least one first communication hole 13b of the first lamination 1b communicates with at least one first communication hole 13a of the adjacent stator lamination 1a, each second communication hole 14b of the first lamination 1b communicates with one second communication hole 14a of the adjacent stator lamination 1a. The first communication hole 13b of the first lamination 1b extends in the axial direction of the stator core 10 and communicates with the axial end surface of the stator core 10. The second communication hole 14b of the first lamination 1b extends in the axial direction of the stator core 10 and communicates with the axial end surface of the stator core 10. In the three stator laminations 1a, in the axial direction of the stator core 10, one circulation hole 15 of the middle stator lamination 1a communicates with one first communication hole 13a and one second communication hole 14a of the left stator lamination 1a, and the circulation hole 15 of the middle stator lamination 1a communicates with one first communication hole 13a and one second communication hole 14a of the right stator lamination 1a. In this way, the first communication hole 13 communicates with the second communication hole 14 in the radial direction of the stator core 10.

Still refer to FIG. 8b. The cooling medium may enter the housing 50 through the liquid inlet 101, enter the radial groove 52 of the housing 50, and flow in the circumferential direction of the stator core 10 through the radial groove 52 as shown by a dashed arc-shaped arrow in the figure, to enter each first communication hole 13a of each stator lamination 1a and each first communication hole 13b of the two first laminations 1b. A part of the cooling medium may flow to the axial end surface of the stator core 10 in the axial direction of the stator core 10 through the first communication hole 13b of the first lamination 1b and be sprayed out from the axial end surface of the stator core 10. The first communication hole 13b and the first communication hole 13a are located between the inner wall of the housing 50 and the outer circumferential surface of the stator core 10, so that liquid cooling heat dissipation can be performed for the stator core 10 on the outer circumferential surface of the stator core 10. In the radial direction of the stator core 10, a part of the cooling medium may flow from the first communication hole 13a and the circulation hole 15 of the stator lamination 1a to the second communication hole 14a, then flow from the second communication hole 14a of the stator lamination 1a to the second communication hole 14b of the first lamination 1b, and finally flows from the second communication hole 14b to the axial end surface of the stator core 10 and be sprayed out from the axial end surface of the stator core 10. The second communication hole 14a and the second communication hole 14b are located at positions that are of the stator core 10 and that are close to the winding slot 104, so that liquid cooling heat dissipation can be performed for the stator core 10 on an inner side of the stator core 10. The cooling medium sprayed out from the axial end surface of the stator core 10 may perform liquid cooling heat dissipation on the end winding.

Based on the foregoing structure, it may be considered that a heat dissipation channel including the first communication hole 13b and the first communication hole 13a is an outer-layer heat dissipation channel of the stator core 10, and a heat dissipation channel including the second communication hole 14a and the second communication hole 14b is an inner-layer heat dissipation channel of the stator core 10. The outer-layer heat dissipation channel and the inner-layer heat dissipation channel can be connected through rotation and superposition of the at least two stator laminations 1a.

A structure of the stator lamination 1a provided in this embodiment of this application may have a plurality of implementations. The following describes the stator lamination 1a by using a specific embodiment as an example.

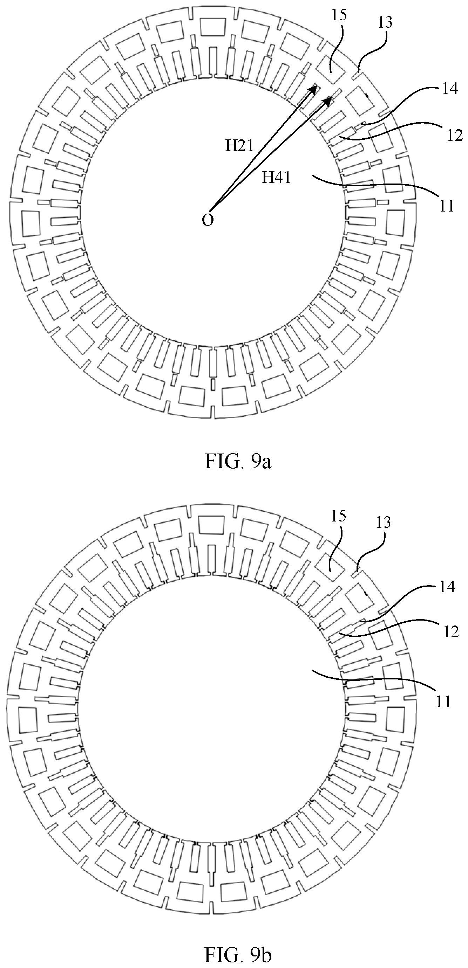

FIG. 9a shows an example of the stator lamination 1a. A difference from the stator lamination 1a shown in FIG. 5a lies in that: The second communication hole 14 and the slot 12 of the stator lamination 1a shown in FIG. 9a are spaced apart in the radial direction of the stator lamination 1a. Specifically, in the radial direction of the stator lamination 1a, the spacing between the second communication hole 14 and the center hole 11 is greater than a radial dimension of the slot 12, and a spacing H41 between the second communication hole 14 and the center O is greater than a spacing H21 between the slot bottom of the slot 12 and the center O. In this structure, the cooling medium flowing in the second communication hole 14 may pass through the bottom of the slot 12, and a winding accommodated in the slot 12 is cooled through the stator lamination 1a.

FIG. 9b shows an example of the stator lamination 1a. A difference from the stator lamination 1a shown in FIG. 9a lies in that: Each second communication hole 14 of the stator lamination 1a shown in FIG. 9b communicates with one slot 12 in the radial direction of the stator lamination 1a. For example, in the circumferential direction of the stator lamination 1a, the circumferential dimension of the second communication hole 14 is less than a circumferential dimension of the slot bottom of the slot 12. For example, one of any two circumferentially adjacent slots 12 of the stator lamination 1a is configured to communicate with one second communication hole 14. The stator core 10 having the stator lamination 1a may implement an intra-slot channel of the stator core 10, and the cooling medium in the second communication hole 14 may directly enter the slot 12 to perform liquid cooling heat dissipation for a winding accommodated in the slot 12. In this case, a structure of the second communication hole 14 may be omitted from the first lamination 1b.

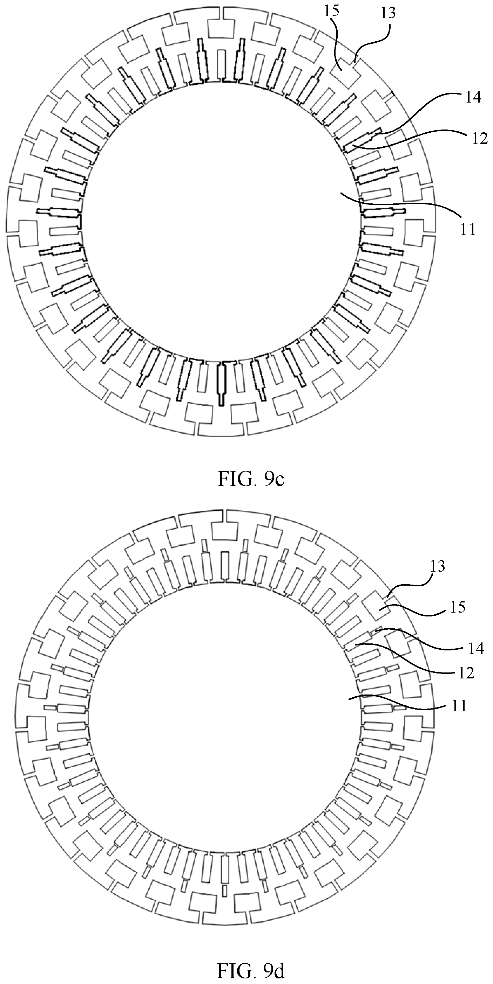

A difference between the stator lamination 1a shown in FIG. 9c and the stator lamination 1a shown in FIG. 9b lies in that: The plurality of first communication holes 13 of the stator lamination 1a shown in FIG. 9c are staggered relative to the plurality of second communication holes 14 in the circumferential direction of the stator lamination 1a, and each first communication hole 13 communicates with one circulation hole 15 in the radial direction of the stator lamination 1a.

A difference between the stator lamination 1a shown in FIG. 9d and the stator lamination 1a shown in FIG. 9a lies in that: The plurality of first communication holes 13 of the stator lamination 1a shown in FIG. 9d are staggered relative to the plurality of second communication holes 14 in the circumferential direction of the stator lamination 1a, and each first communication hole 13 communicates with one circulation hole 15 in the radial direction of the stator lamination 1a.

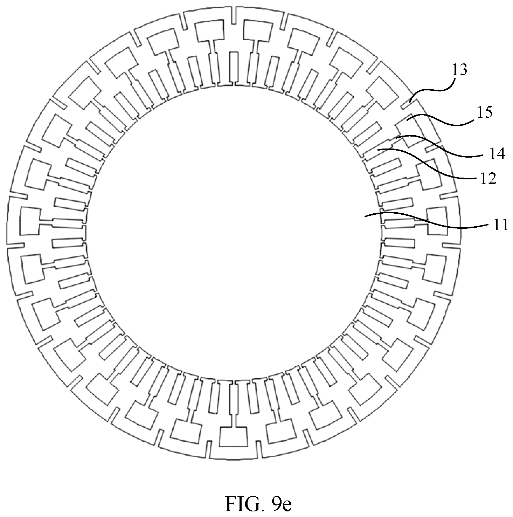

A difference between the stator lamination 1a shown in FIG. 9e and the stator lamination 1a shown in FIG. 9a and FIG. 9b lies in that: Each second communication hole 14 of the stator lamination 1a shown in FIG. 9d communicates with both one circulation hole 15 and one slot 12 in the radial direction of the stator lamination 1a.

After two or more stator laminations 1a provided in the foregoing embodiment are superimposed in a circumferentially staggered manner, circulation holes 15 of adjacent stator laminations 1a can be staggered and connected in the circumferential direction of the stator core 10, so that a channel extending in the circumferential direction of the stator core 10 is formed in the stator core 10 for the cooling medium to flow in the circumferential direction. The channel formed by connecting the plurality of circulation holes 15 can further connect the first communication hole 13 and the second communication hole 14, so that the outer-layer cooling channel and the inner-layer cooling channel of the stator core 10 are connected.

For the stator core 10 having a plurality of stator laminations 1a, the first communication hole 13 of the stator lamination 1a is a channel through which the cooling medium enters the circulation hole 15. A quantity and distribution density of the first communication holes 13 may affect a liquid amount of the cooling medium that enters the circulation hole 15 and the second communication hole 14, and further affect cooling efficiency. With reference to the diagram of the structure of the housing 50 and the stator core 10, there is, for example, one liquid inlet 101 of the stator 100. The cooling medium has a high flow rate when entering the housing 50 through the liquid inlet 101. A flow rate of the cooling medium entering the first communication hole 13 at a position corresponding to that of the liquid inlet 101 is high. However, a flow rate of the cooling medium that is transported, through the radial groove 52 of the housing 50, to the first communication hole 13 that is of the stator lamination 1a and that is away from the liquid inlet 101 is reduced. In addition, there is a time difference when the cooling medium enters different first communication holes 13. As a result, the flow rate of the cooling medium entering the stator core 10 through different first communication holes 13 is non-uniformly distributed. Therefore, distribution density of the first communication hole 13 and the circulation hole 15 may be adjusted, so that one or more first communication holes 13 are spaced apart between two adjacent circulation holes 15 in the circumferential direction of the stator lamination 1a. A quantity of first communication holes 13 between two circumferentially adjacent circulation holes 15 may be adjusted based on a specific structure of the stator 100 and distribution of the liquid inlet.

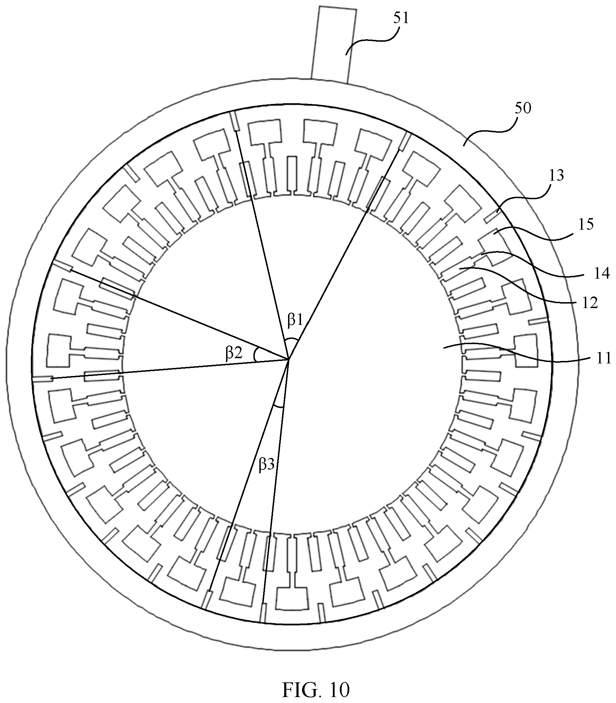

For example, as shown in FIG. 10, when there is one liquid inlet 101 of the stator 100 and the liquid inlet 101 is located at a specific angle in the circumferential direction of the stator lamination 1a, position distribution of the first communication hole 13 of the stator lamination 1a may be adjusted. In this way, the first communication holes 13 close to the liquid inlet 101 are sparsely distributed, and the first communication holes 13 away from the liquid inlet 101 are densely distributed. Herein, for example, in a range close to the liquid inlet 101, an included angle between two adjacent first communication holes 13 is β1, and three circulation holes 15 are distributed between the two first communication holes 13. In a range that is opposite to the liquid inlet 101 in the radial direction of the stator lamination 1a, an included angle between two adjacent first communication holes 13 is β3, and one circulation hole 15 is distributed between the two first communication holes 13. An included angle between two adjacent first communication holes 13 located between the foregoing two parts is β2, two circulation holes 15 are distributed between the two first communication holes 13, where β1>β2>β3. Certainly, distribution shown in FIG. 10 between the first communication hole 13 and the circulation hole 15 is merely an example.

In conclusion, when the stator core 10 provided in this embodiment of this application includes at least two adjacently arranged stator laminations 1a, the cooling medium on the outer circumferential surface of the stator core 10 may be guided into the stator core 10 by deflecting adjacent stator laminations 1a, and a channel for the cooling medium to flow in the circumferential direction can be further formed after the circulation holes 15 of the two adjacent stator laminations 1a are staggered relative to and communicate with each other in the circumferential direction. When the stator lamination 1a further includes the second communication hole 14 located at the inner layer, the outer-layer cooling channel can communicate with the inner-layer cooling channel, and the cooling medium can be guided to the end winding in cooperation with the first lamination 1b, to improve heat dissipation effect of the end winding 201. For the entire motor 100, no other end oil spray structure is required to spray a coolant onto the end winding. This simplifies a structure and a manufacturing process of the motor 100. In the axial direction of the motor 100, a size of the motor 100 may be smaller. This helps implement the size of the motor 100. When the motor 100 is applied to the powertrain 1000 and the electric vehicle, smaller space can be occupied, so that greater space savings can be obtained.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A stator lamination having a plurality of communication holes, wherein the stator lamination comprises a center hole, a plurality of slots, a plurality of first communication holes, and a plurality of circulation holes, each slot communicates with the center hole in a radial direction of the stator lamination, and each first communication hole, each circulation hole, and each slot separately run through the stator lamination in an axial direction of the stator lamination;
in a circumferential direction of the stator lamination, the plurality of first communication holes are spaced apart, the plurality of circulation holes are spaced apart, and the plurality of slots are spaced apart; and
in the radial direction of the stator lamination, a spacing between each first communication hole and the center hole is greater than a spacing between each circulation hole and the center hole, each first communication hole communicates with an outer circumferential surface of the stator lamination, and a radial dimension of each first communication hole is greater than or equal to a spacing between the circulation hole and the outer circumferential surface of the stator lamination.

2. The stator lamination according to claim 1, wherein in the circumferential direction of the stator lamination, a circumferential dimension of the circulation hole is greater than a circumferential dimension of the first communication hole, and a distance between any two adjacent circulation holes is greater than the circumferential dimension of the first communication hole.

3. The stator lamination according to claim 1 or 2, wherein one or more of the first communication holes are spaced apart between two adjacent circulation holes in the circumferential direction of the stator lamination.

4. The stator lamination according to any one of claims 1 to 3, wherein the stator lamination comprises a plurality of second communication holes, each second communication hole runs through the stator lamination in the axial direction of the stator lamination, and the plurality of second communication holes are spaced apart in the circumferential direction of the stator lamination; and
in the radial direction of the stator lamination, a spacing between each second communication hole and the outer circumferential surface of the stator lamination is less than or equal to a sum of the spacing between the circulation hole and the outer circumferential surface of the stator lamination and a radial dimension of the circulation hole.

5. The stator lamination according to claim 4, wherein in the circumferential direction of the stator lamination, the circumferential dimension of the circulation hole is greater than a circumferential dimension of the second communication hole, and the distance between any two adjacent circulation holes is greater than the circumferential dimension of the second communication hole.

6. The stator lamination according to claim 4 or 5, wherein a quantity of the plurality of second communication holes is less than a quantity of the plurality of slots; and
in the circumferential direction of the stator lamination, a spacing between two adjacent slots is less than a spacing between two adjacent second communication holes.

7. The stator lamination according to claim 6, wherein the plurality of slots respectively communicate with the plurality of second communication holes in the radial direction of the stator lamination.

8. The stator lamination according to claim 7, wherein one of any two circumferentially adjacent slots of the stator lamination is configured to communicate with one second communication hole.

9. The stator lamination according to claim 6, wherein in the radial direction of the stator lamination, each second communication hole is spaced between one slot and the outer circumferential surface of the stator lamination, and a spacing between the second communication hole and the center hole is greater than a radial dimension of the slot.

10. The stator lamination according to claim 6, wherein in the circumferential direction of the stator lamination, each second communication hole is spaced between any two adjacent slots in the circumferential direction of the stator lamination.

11. The stator lamination according to any one of claims 4 to 10, wherein in the circumferential direction of the stator lamination, the plurality of first communication holes are staggered relative to the plurality of second communication holes, and one of one first communication hole and one adjacent second communication hole communicates with the circulation hole.

12. The stator lamination according to any one of claims 1 to 11, wherein in the circumferential direction of the stator lamination, the distance between any two adjacent circulation holes is less than the circumferential dimension of the circulation hole.

13. A stator core, wherein the stator core comprises at least two stator laminations according to any one of claims 1 to 12; and
the at least two stator laminations are adjacently arranged in an axial direction of the stator core, each circulation hole of one stator lamination is staggered relative to and communicates with one circulation hole of another stator lamination in a circumferential direction of the stator core, and each first communication hole of one stator lamination communicates with one circulation hole of another stator lamination.

14. The stator core according to claim 13, wherein the stator core comprises at least one first lamination, and in the axial direction of the stator core, the at least one first lamination is arranged on a side that is of one of the stator laminations and that is away from another adjacent stator lamination; and
in the axial direction of the stator core, each first communication hole of the stator lamination communicates with at least one first communication hole of the adjacent first lamination.

15. A motor, wherein the motor comprises a housing and the stator core according to claim 13 or 14; and
the housing is sleeved on an outer circumferential surface of the stator core, the housing comprises a liquid inlet, and the liquid inlet is configured to communicate with first communication holes of the stator lamination.

16. The motor according to claim 15, wherein the housing comprises the liquid inlet, and an inner wall that is of the housing and that faces the stator core comprises a radial groove;
in a radial direction of the stator core, the liquid inlet communicates with the radial groove, and the radial groove communicates with at least one of the first communication holes; and
in an axial direction of the stator core, a radial dimension of the radial groove is greater than or equal to an axial size of one stator lamination.

17. A powertrain, comprising a reducer or a transmission, and the motor according to claim 15 or 16, wherein a motor shaft of the motor is in transmission connection to an input shaft of the reducer or an input shaft of the transmission.

18. An electric vehicle, comprising wheels, a transmission mechanism, and the powertrain according to claim 17, wherein the powertrain drives the wheels through the transmission mechanism.
